# FASCICULE DE BREVET EUROPEEN

(11) **EP 1 363 272 B1**
(45) Date de publication et mention de la délivrance du brevet: **15.08.2007**
(21) Numéro de dépôt: 03291085.3
(22) Date de dépôt: 06.05.2003
(51) Int. Cl.: G10L 21/00, G10L 19/00, H04M 1/725

(54) **Terminal de télécommunication permettant de modifier la voix transmise lors d'une communication téléphonique**
Telekommunikationsendgerät zur Veränderung eines übertragenen Sprachsignals bei einer bestehenden Fernsprechverbindung
Telecommunication terminal with means for altering the transmitted voice during a telephone communication

(30) Priorité: 16.05.2002 FR 0206035
(43) Date de publication de la demande: 19.11.2003
(73) Titulaire: TCL & ALCATEL MOBILE PHONES LIMITED, China Hong Kong City, 33 Canton Road, Tsim Sha Tsui,Kowloon, Hong Kong (CN)
(72) Inventeur: Bonnard, Pierre, 92150 Suresnes (FR); Bourmeyster, Ivan, 75015 Paris (FR); Fourquin, Xavier, 92310 Sevres (FR); Ladouce, Pierre, 95130 Franconville (FR)
(74) Mandataire: Feray, Valérie

(56) Documents cités:
- EP-A- 1 126 439
- WO-A-98/35340
- US-A- 4 823 380
- US-A- 5 692 101
- US-A- 5 956 685
- US-A1- 2001 006 901
- PATENT ABSTRACTS OF JAPAN vol. 2000, no. 01, 31 janvier 2000 (2000-01-31) & JP 11 289361 A (NEC CORP), 19 octobre 1999 (1999-10-19)

## Description

La présente invention concerne un terminal de télécommunication permettant de modifier la voix transmise lors d'une communication téléphonique, plus particulièrement adapté à un système de téléphonie mobile.

Même si la transmission de la parole reste l'élément essentiel de la téléphonie mobile il n'en demeure pas moins que les fabricants cherchent à différencier leurs produits en offrant de nouveaux services attractifs et distrayants pour le consommateur. Les jeux, les services liés à la reconnaissance vocale ou la multiplication des sonneries d'appel en sont des exemples.

Ces nouveaux services impliquent souvent un coût supplémentaire sur le téléphone lié à l'ajout d'éléments logiciels ou matériels.

La présente invention vise à fournir un terminal de télécommunication offrant un service de modification de la voix transmise par l'utilisateur du terminal lors d'une communication téléphonique, ce service ayant un caractère attractif et distrayant et étant mis en oeuvre de façon simple et économique. <insert page 1a>

La présente invention propose à cet effet un terminal de télécommunication tel que défini dans la revendication 1.

Le document WO 98/35340 décrit un système de conversion de voix dans lequel un signal source (voix d'un premier utilisateur) doit être transformé en un signal cible (voix d'un second utilisateur). Ce système applique le principe des « codebook », c'est-à-dire de bibliothèques de phonèmes préenregistrées pour chaque utilisateur possible (phase d'apprentissage), avec une correspondance unique entre la bibliothèque de phonèmes reliée au premier utilisateur et la bibliothèque de phonèmes correspondant au deuxième utilisateur.

Le document US 5, 956, 685 décrit un système permettant de convertir notamment un signal de parole en un autre signal représentatif d'une voix modifiée. Ce système repose sur le traitement de données de paroles correspondant à des divisions du signal de parole source numérisé en fonction de la ponctuation.

Grâce à l'invention, la mise en place d'un service de modification de la voix transmise par un téléphone mobile se fait de façon simple et économique en utilisant un vocodeur déjà présent dans le téléphone pour le codage de la voix. Les paramètres de reconstruction sont représentatifs de la voix à transmettre et leur modification permet d'agir directement sur la sonorité de la voix transmise.

Avantageusement, lesdits moyens pour modifier les paramètres de reconstruction comportent des moyens pour modifier la fréquence fondamentale de la voix.

Selon un mode de réalisation, ledit codage de source du signal de parole est un codage RPE-LTP (Regular Pulse Excitation Long Term Prediction).

De manière avantageuse, lesdits moyens pour modifier les paramètres de reconstruction comportent des moyens pour modifier les paramètres de filtre court terme dudit vocodeur.

Les paramètres de filtre court terme sont par exemple les coefficients de réflexion, dits coefficients LAR (Log Area Ratio) déterminés pendant un codage du type RPE-LTP.

Selon une variante, lesdits moyens pour modifier les paramètres de reconstruction comportent des moyens pour modifier les paramètres de filtre long terme dudit vocodeur.

Un paramètre de filtre long terme est par exemple la fréquence fondamentale associée à un pitch déterminé pendant un codage du type RPE-LTP.

Avantageusement, lesdits moyens pour modifier les paramètres de reconstruction comportent des moyens pour modifier les paramètres associés à des grandeurs d'excitation dudit vocodeur.

Un paramètre associé à une grandeur d'excitation peut être par exemple un paramètre définissant le signal impulsionnel d'excitation déterminé pendant un codage RPE-LTP.

Selon un mode de réalisation, lesdits moyens pour modifier les paramètres de reconstruction comportent des moyens pour modifier lesdits paramètres en fonction de données codées représentatives d'un ensemble de notes définies par leurs fréquences et leurs durées respectives.

Avantageusement, le terminal comporte des moyens de sélection d'un type de modification de la voix à transmettre.

De manière avantageuse, le terminal comporte des moyens pour configurer manuellement les modifications desdits paramètres de reconstruction du signal de parole.

Selon un mode de réalisation, le terminal comporte des moyens pour exécuter lesdites modifications dans un mode de test.

De manière avantageuse, le terminal est un téléphone mobile.

D'autres caractéristiques et avantages de la présente invention apparaîtront dans la description suivante d'un mode de réalisation de l'invention donné à titre illustratif et nullement limitatif.

Dans les figures suivantes :
- La figure 1 représente schématiquement un terminal de télécommunication selon l'invention,
- La figure 2 représente schématiquement les moyens de codage et de modification de la voix utilisés dans un terminal de télécommunication selon l'invention, utilisant un codage RPE-LTP conforme au standard GSM 06.10.

Dans toutes les figures, les éléments communs portent les mêmes numéros de référence.

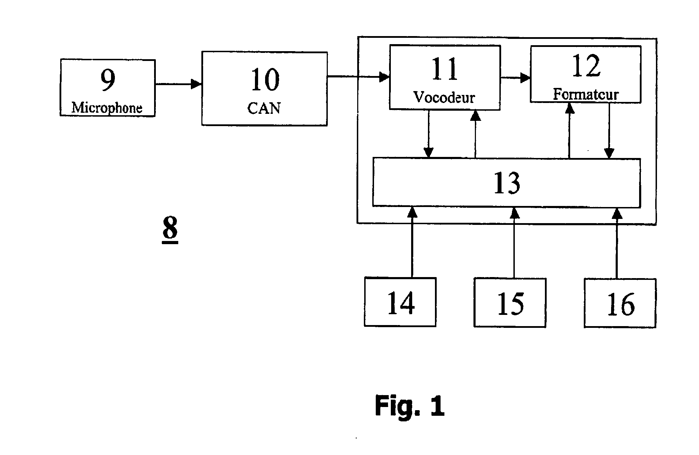

La figure 1 représente un terminal de télécommunication 8 selon l'invention tel qu'un téléphone mobile.

Le terminal 8 comporte un microphone 9, un convertisseur analogique numérique 10, un vocodeur 11, un formateur de données 12, des moyens 13 pour modifier des paramètres de reconstruction de la voix, des moyens 14 de sélection d'un type de modification de la voix à transmettre, des moyens 15 pour configurer manuellement les modifications des paramètres de reconstruction du signal de parole et des moyens 16 pour exécuter des modifications dans un mode de test.

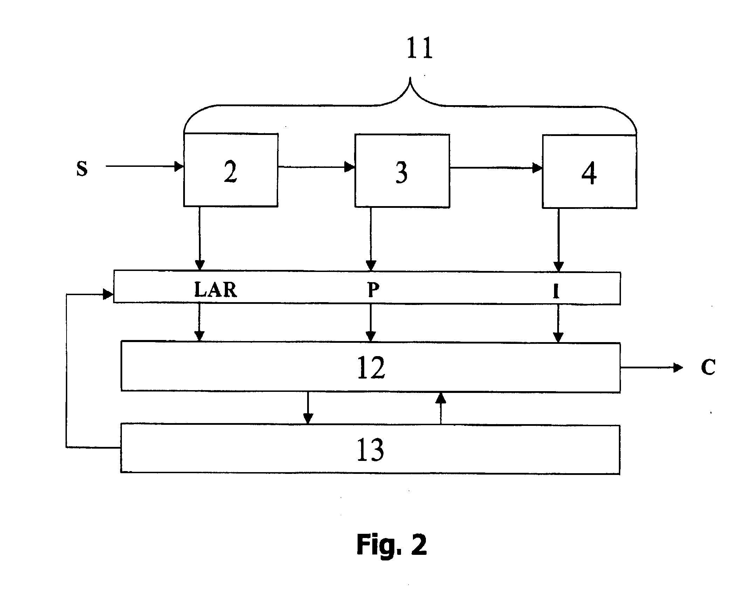

Le vocodeur 11, le formateur de données 12 et les moyens 13 pour modifier les paramètres de reconstruction de la voix vont être décrits ci dessous en relation avec la figure 2.

La figure 2 représente un vocodeur 11 pour exécuter un codage RPE-LTP conforme au standard GSM 06.10, un formateur 12 de flux de données et des moyens 13 de modifications de paramètres de reconstruction de la voix. Le vocodeur 11, le formateur 12 et les moyens 13 sont des moyens logiciels exécutés par un processeur programmable non représenté.

Le vocodeur 11 inclut des moyens 2 de détermination de coefficients de réflexion LAR, des moyens 3 de détermination d'une fréquence fondamentale de la voix et des moyens 4 de détermination d'un signal impulsionnel d'excitation, à partir d'un signal S échantillonné.

Le principe du codage RPE-LTP consiste à modéliser le signal de parole comme un filtre linéaire dont les paramètres évoluent dans le temps, ledit filtre linéaire étant excité par un signal impulsionnel. Dès lors, on comprend que l'objectif de ce codage est de déterminer le signal impulsionnel d'excitation, les différents paramètres définissant le filtre linéaire et la fréquence fondamentale de la voix à transmettre. Ce type de codage de la parole opère sur des trames de 20 ms sur la bande [300-3400 Hz]. Le filtre linéaire se décompose en deux parties : une première partie qui prend en compte les corrélations à courts termes du signal de parole et une deuxième partie qui prend en compte les corrélations à long terme du signal de parole. On parlera dans ce qui suit de filtre court terme et de filtre long terme.

Le signal S constitue une trame de parole de 20 ms échantillonnée à 8 kHz.

Les moyens 2 permettent de déterminer les coefficients de réflexion LAR du filtre court terme. On utilise pour cela l'algorithme de Durbin qui est appliqué au signal filtré afin d'en obtenir une prédiction linéaire. L'algorithme de Durbin génère dix coefficients de réflexion, dits coefficients LAR, compris entre -1 et 1 exprimés à l'échelle logarithmique LAR (Log Area Ratio).

Les moyens 3 de détermination d'une fréquence fondamentale de la voix utilisent un procédé de prédiction associé au filtre long terme sur des trames de 5 ms et permettent de reproduire la fréquence fondamentale associée à un pitch P compris entre 56 et 444 Hz et caractéristique du locuteur ainsi que le gain associé à cette fréquence.

Les moyens 4 permettent de déterminer le signal impulsionnel I d'excitation.

L'ensemble des données fournies par les moyens 2, 3 et 4 pour une trame de 20 ms est formaté dans le formateur 12 de flux de données qui va produire un signal de parole C codé.

Lorsque ces paramètres sont définis, on peut produire différents effets sur la voix en modifiant lesdits paramètres LAR, P et I. Les moyens de modification 13 permettent de modifier ces différents paramètres.

Ainsi, les moyens 13 de modification peuvent modifier uniquement la valeur du pitch associée à la fréquence fondamentale de façon à transformer une voix d'homme en une voix de femme. Pour cela, la valeur de pitch P de chaque trame est modifiée en une valeur Min (P + P_{effet}, Max (P)), P_{effet} étant une valeur prédéfinie, par exemple à 90 Hz, et Max (P) étant la valeur de pitch maximale acceptée par le système standard. En effet, une voix masculine a une valeur de pitch à environ 120 Hz alors qu'une voix féminine a une valeur de pitch à environ 210 Hz.

Les moyens 13 de modification peuvent procéder de façon similaire pour transformer une voix de femme en une voix d'homme. Pour cela, la valeur de pitch P de chaque trame est modifiée en une valeur Max (P - P_{effet}, Min (P)), P_{effet} étant une valeur prédéfinie à 90 Hz et Min (P) étant la valeur de pitch minimale acceptée par le système standard.

On peut également obtenir un effet de chuchotement lorsque les moyens 13 modifient le pitch et le gain. Pour cela, les moyens de modification 13 augmentent le pitch et diminuent le gain de sorte que la sortie du signal du filtre long terme soit substantiellement modifiée en diminuant l'effet des vibrations des cordes vocales. Les paramètres LAR restent inchangés.

On peut aussi obtenir un effet de voix robotisée lorsque les moyens 13 modifient les paramètres du filtre long terme. Pour cela, le pitch est fixé à une valeur relativement élevée. Comme pour l'effet de chuchotement, la prosodie, c'est à dire l'ensemble des éléments phoniques qui caractérisent le langage parlé, est complètement modifiée et transformée en un son monotone ayant une fréquence fondamentale unique et des paramètres LAR inchangés.

Une autre propriété remarquable des paramètres des codeurs de voix concerne le fait que les paramètres LAR représentent le trajet vocal et le trajet nasal liés à la production de parole, ces deux trajets pouvant être modélisés par des filtres de résonance du type filtre « tout pôle », chaque pôle représentant une fréquence de résonance. Dès lors, la production de la parole faisant intervenir le trajet vocal et le trajet nasal, les moyens 13 peuvent modifier ces paramètres de sorte que les voyelles résonnent comme celles d'une personne qui a le nez bouché.

Le trajet vocal et le trajet nasal peuvent chacun être modélisés par un filtre tout pôle mais la somme de ces deux filtres n'est pas tout pôle. Pour modéliser la combinaison de ces deux trajets sous la forme d'un filtre tout pôle, il faut construire un zéro en plaçant deux pôles cote à cote. Ce zéro représente la contribution de la cavité nasale sur la cavité vocale.

En rapprochant ces deux pôles cote à cote, les moyens de modification 13 diminuent la contribution de la cavité nasale et donnent ainsi un effet « enrhumé » à la voix.

Les paramètres peuvent également être modifiés en fonction de données codées représentatives d'un ensemble de notes définies par leurs fréquences et leurs durées respectives. Ainsi la voix modifiée peut suivre une partition définie dans un format de codage définissant un ensemble de couples (fréquence, durée) et avoir ainsi un effet chanté._Une partition est fournie aux moyens 13 de modification des paramètres de reconstruction. Cette partition peut être sous un format de codage de musique MIDI, SMAF de Yamaha^{®}, EMR R5 polyphonique, IrDA iMelody de l'IrMC (Infrared Mobile Communications) ou un autre format de description vectoriel de la musique. Dans une étape de prétraitement, la partition est transcrite automatiquement, si nécessaire, pour que les fréquences des notes soient dans l'intervalle [56 Hz, 444 Hz].

Les notes sont interprétées en durée et en fréquence, à chaque note correspondant une date de début, une date de fin et une fréquence. Les trames de parole de 5 ms sont modifiées par les moyens 13 pour que le pitch de la parole soit égal à la fréquence de la note correspondante au même instant.

Les modifications des paramètres se font généralement via des échanges entre le formateur de flux de données et les moyens 13 pour modifier les paramètres. Toutefois, on peut également envisager des modifications des paramètres faites directement au niveau du vocodeur 11.

En figure 1, l'utilisateur a la possibilité de sélectionner le type d'effets souhaité sur la voix à transmettre via les moyens 14 de sélection d'un type de modification. Il peut également configurer manuellement les modifications des paramètres de reconstruction du signal de parole via les moyens 15. Ainsi, il peut par exemple influer sur la valeur du pitch modifié à Min (P + P_{effet}, Max (P)) dans le cas d'une transformation de voix masculine en voix féminine en fixant lui-même la valeur de P_{effet}. Il peut également tester l'effet obtenu via les moyens 16 qui lui permettent d'exécuter le type de modification sélectionnée avec les paramètres tels qu'il les a fixés.

Lors d'une communication mobile, la voix de l'utilisateur est d'abord échantillonnée et numérisée par les moyens 9. Elle est ensuite codée par le vocodeur 11, lequel met en oeuvre l'étape 7 tel que décrite en relation avec la figure 1.

La voix codée est ensuite formatée par le formateur 12 sous forme de paramètres de reconstruction de la voix obtenus grâce au vocodeur 11.

Les moyens 13, commandés par les moyens 14, 15 et 16 vont alors modifier les paramètres formatés de reconstruction de la voix pour obtenir les effets recherchés par l'utilisateur. Les paramètres modifiés sont ensuite retransmis aux moyens 12 puis sont envoyés à l'interlocuteur via le réseau de télécommunication ou exécutés en mode test pour l'utilisateur.

On peut également envisager une modification des paramètres de reconstruction directement au niveau des moyens 11 par les moyens 13.

Bien entendu, l'invention n'est pas limitée au mode de réalisation qui vient d'être décrit.

Notamment, le mode de réalisation porte sur un codage de source du type RPE-LTP mais on peut envisager tout autre codage de source tel que par exemple l'ETS 300 726 GSM EFR (Enhanced Full Rate) et le 3GPP TS 26.071 AM (Adaptive Multirate).

## Revendications

1. Terminal (8) de télécommunication comportant des moyens (9) d'entrée par l'utilisateur dudit terminal d'un signal de parole analogique, des moyens (10) pour convertir ledit signal de parole analogique en un signal de parole numérique (S), un vocodeur (11) pour exécuter un codage de source dudit signal de parole numérique (S), ledit vocodeur (11) incluant des moyens (2, 3, 4) pour extraire des paramètres (LAR, P, I) de reconstruction dudit signal de parole numérique, et un formateur de données (12) qui délivre un signal de parole codé (C) fonction des paramètres de reconstruction extraits, **caractérisé en ce que** ledit terminal (8) comporte des moyens (13) pour modifier, lors d'une communication téléphonique, au moins un desdits paramètres de reconstruction de sorte que la voix transmise associée au dit signal de parole codé (C) soit modifiée, lesdits moyens étant commandés par des moyens (14) de sélection par l'utilisateur d'un type de modification de la voix à transmettre et/ou par des moyens (15) pour configurer manuellement les modifications desdits paramètres de reconstruction de parole.

2. Terminal (8) selon la revendication précédente **caractérisé en ce que** lesdits moyens (13) pour modifier lesdits paramètres de reconstruction comportent des moyens pour modifier un paramètre représentatif de la fréquence fondamentale de la voix.

3. Terminal (8) selon l'une des revendications précédentes **caractérisé en ce que** ledit codage de source du signal de parole est un codage RPE-LTP.

4. Terminal (8) selon l'une des revendications précédentes **caractérisé en ce que** lesdits moyens (13) pour modifier lesdits paramètres de reconstruction comportent des moyens pour modifier les paramètres de filtre court terme dudit vocodeur.

5. Terminal (8) selon l'une des revendications précédentes **caractérisé en ce que** lesdits moyens (13) pour modifier lesdits paramètres de reconstruction comportent des moyens pour modifier les paramètres associés à des grandeurs d'excitation.

6. Terminal (8) selon l'une des revendications précédentes **caractérisé en ce que** lesdits moyens (13) pour modifier lesdits paramètres de reconstruction comportent des moyens pour modifier les paramètres de filtre long terme dudit vocodeur.

7. Terminal (8) selon l'une des revendications précédentes **caractérisé en ce que** lesdits moyens (13) pour modifier lesdits paramètres de reconstruction comportent des moyens pour modifier lesdits paramètres en fonction de données codées représentatives d'un ensemble de notes définies par leurs fréquences et leurs durées respectives.

8. Terminal selon l'une des revendications précédentes comportant des moyens (16) pour exécuter lesdites modifications dans un mode de test.

9. Terminal selon l'une des revendications précédentes **caractérisé en ce que** ledit terminal est un téléphone mobile.

## Claims

1. A telecommunications terminal (8) including means (9) for having an analog speech signal entered by the user of said terminal, means (10) for converting said analog speech signal into a digital speech signal (S), a vocoder (11) for executing a source coding of said digital speech signal (S), said vocoder (11) including means (2, 3, 4) for extracting parameters (LAR, P, I) for reconstructing said digital speech signal, and a data formatter (12) which delivers a coded speech signal (C) according to the extracted reconstruction parameters, **characterized in that** said terminal (8) includes means (13) for modifying, during a telephone call, at least one of said reconstruction parameters so that the transmitted voice associated with said coded speech signal (C) is modified, said means being controlled by means (14) for having the user select a type of modification of the voice to be transmitted and/or by means (15) for manually configuring the modifications of said speech reconstruction parameters.

2. The terminal (8) according to the preceding claim, **characterized in that** said means (13) for modifying said reconstruction parameters includes means for modifying a parameter representative of the fundamental frequency of the voice.

3. The terminal (8) according to any of the preceding claims, **characterized in that** said source coding of the speech signal is RPE-LTP coding.

4. The terminal (8) according to any of the preceding claims, **characterized in that** said means (13) for modifying said reconstruction parameters include means for modifying the short term filter parameters of said vocoder.

5. The terminal (8) according to any of the preceding claims, **characterized in that** said means (13) for modifying said reconstruction parameters include means for modifying the parameters associated with excitation quantities.

6. The terminal (8) according to any of the preceding claims, **characterized in that** said means (13) for modifying said reconstruction parameters include means for modifying the long term filter parameters of said vocoder.

7. The terminal (8) according to any of the preceding claims, **characterized in that** said means (13) for modifying said reconstruction parameters include means for modifying said parameters according to coded data representative of a set of notes defined by their frequencies and their respective durations.

8. The terminal according to any of the preceding claims, including means (16) for executing said modifications in a test mode.

9. The terminal according to any of the preceding claims, **characterized in that** said terminal is a mobile telephone.

## Patentansprüche

1. Telekommunikationsendgerät (8) mit Eingangselementen (9) für den Benutzer des Endgerätes für ein analoges Sprachsignal, Einrichtungen (10) zur Umwandlung des analogen Sprachsignals in ein numerisches Sprachsignal (S), einem Vocoder (11) zur Durchführung einer Verschlüsselung der Quelle des numerischen Sprachsignals (S), wobei der Vocoder (11) Einrichtungen (2, 3, 4) besitzt, um Rekonstruktionsparameter (LAR, P I) des numerischen Sprachsignals abzufragen bzw. zu extrahieren, und einen Daten-Formatierer (12), der ein verschlüsseltes Sprachsignal (C) in Abhängigkeit von den abgefragten bzw. extrahierten Rekonstruktionsparametern liefert, **dadurch gekennzeichnet, dass** das Endgerät (8) Einrichtungen (13) besitzt, um während einer Fernsprechverbindung mindestens einen der Rekonstruktionsparameter zu verändern, so dass die mit dem verschlüsselten Sprachsignal (C) übertragene Stimme verändert wird, wobei die Einrichtungen durch Auswahleinrichtungen (14) gesteuert werden, so dass der Benutzer eine Änderungsart für die zu übertragende Stimme auswählen kann, und/oder durch Einrichtungen (15) zur manuellen Konfiguration der Änderungen der Rekonstruktionsparameter für die Sprache gesteuert werden.

2. Endgerät (8) nach dem vorhergehenden Anspruch, **dadurch gekennzeichnet, dass** die Einrichtungen (13) zur Veränderung der Rekonstruktionsparameter Elemente besitzen, um einen repräsentativen Parameter der Grundfrequenz der Stimme zu verändern.

3. Endgerät (8) nach einem der vorhergehenden Ansprüche, **dadurch gekennzeichnet, dass** es sich bei der Verschlüsselung der Quelle des Sprachsignals um eine RPE-LTP-Verschlüsselung handelt.

4. Endgerät (8) nach einem der vorhergehenden Ansprüche, **dadurch gekennzeichnet, dass** die Einrichtungen (13) zur Veränderung der Rekonstruktionsparameter Elemente besitzen, um die Parameter des Kurzzeit-Filters des Vocoders zu verändern.

5. Endgerät (8) nach einem der vorhergehenden Ansprüche, **dadurch gekennzeichnet, dass** die Einrichtungen (13) zur Veränderung der Rekonstruktionsparameter Elemente besitzen, um die Parameter, die mit den Erregungsgrößen verbunden sind, zu verändern.

6. Endgerät (8) nach einem der vorhergehenden Ansprüche, **dadurch gekennzeichnet, dass** die Einrichtungen (13) zur Veränderungen der Rekonstruktionsparameter Elemente besitzen, um die Parameter des Langzeit-Filters des Vocoders zu verändern.

7. Endgerät (8) nach einem der vorhergehenden Ansprüche, **dadurch gekennzeichnet, dass** die Einrichtungen (13) zur Veränderung der Rekonstruktionsparameter Elemente besitzen, um die Parameter in Abhängigkeit von den verschlüsselten Daten zu verändern, die repräsentativ sind für eine Gesamtheit von Tönen, die durch ihre jeweiligen Frequenzen und ihre jeweilige Dauer definiert werden.

8. Endgerät (8) nach einem der vorhergehenden Ansprüche, das Einrichtungen (16) zur Durchführung der Änderungen in einem Testmodus besitzt.

9. Endgerät (8) nach einem der vorhergehenden Ansprüche, **dadurch gekennzeichnet, dass** es sich bei dem Endgerät um ein Mobiltelephon handelt.
